(19) Europäisches Patentamt
European Patent Office
Office européen des brevets

(11) **EP 3 210 039 B1**

(12) **FASCICULE DE BREVET EUROPEEN**

(45) Date de publication et mention
de la délivrance du brevet:
**19.06.2019   Bulletin 2019/25**

(51) Int Cl.:
*G01S 17/93* *(2006.01)*       *G01S 7/481* *(2006.01)*
*G01S 7/491* *(2006.01)*       *F21S 41/675* *(2018.01)*

(21) Numéro de dépôt: **15786906.6**

(22) Date de dépôt: **23.10.2015**

(86) Numéro de dépôt international:
**PCT/EP2015/074629**

(87) Numéro de publication internationale:
**WO 2016/062872 (28.04.2016 Gazette 2016/17)**

(54) **SYSTÈME D'ÉCLAIRAGE ET/OU DE SIGNALISATION COMPRENANT DES MOYENS DE TÉLÉMÉTRIE**

BELEUCHTUNGS- UND/ODER SIGNALISIERUNGSSYSTEM MIT TELEMETRIEVORRICHTUNG

LIGHTING AND/OR SIGNALLING SYSTEM COMPRISING TELEMETRY MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.10.2014   FR 1460271**

(43) Date de publication de la demande:
**30.08.2017   Bulletin 2017/35**

(73) Titulaire: **Valeo Vision**
**93012 Bobigny Cedex (FR)**

(72) Inventeurs:
• **PUENTE, Jean-Claude**
  **F-93190 Livry Gargan (FR)**
• **ALBOU, Pierre**
  **F-75013 Paris (FR)**
• **GODBILLON, Vincent**
  **F-75011 Paris (FR)**

(74) Mandataire: **Schaffner, Jean**
**Valeo Vision**
**34, rue Saint-André**
**93012 Bobigny (FR)**

(56) Documents cités:
DE-A1-102006 025 020     US-A1- 2007 228 262
US-A1- 2011 249 460     US-A1- 2013 190 971

**Description**

L'invention concerne le domaine des systèmes d'éclairage et/ou de signalisation destinés en particulier aux véhicules automobiles.

L'invention s'intéresse plus particulièrement aux systèmes d'éclairage et/ou de signalisation permettant de former un faisceau lumineux à l'avant du véhicule, dont les dimensions, l'intensité et/ou la direction sont adaptables afin de tenir compte des conditions de circulation.

Ces systèmes, décrits à titre d'exemple dans la publication EP 2 063 170, comprennent une source de type laser dont le rayonnement lumineux est réparti spatialement, au moyen d'un système à balayage, sur la surface d'un dispositif de conversion de longueur d'onde qui comprend un substrat en matériau transparent sur lequel est déposée une couche mince de matériau phosphorescent. Ce matériau, qui ne contient pas nécessairement du phosphore, comprend différents éléments chimiques aptes à émettre de la lumière après avoir été éclairés par une lumière primaire d'excitation.

Le dispositif de conversion exploite l'aptitude de ces matériaux à restituer la lumière à une longueur d'onde différente de celle de la lumière d'excitation.

Le rayonnement lumineux traversant le dispositif de conversion apparait alors sous la forme d'une lumière blanche, lorsque la longueur d'onde de la lumière restituée par phosphorescence, et donc le choix des matériaux composant la couche phosphorescente, est accordée avec la longueur d'onde de la lumière d'excitation.

Le système d'éclairage tel que décrit dans la publication en référence, comporte également un système optique d'imagerie recevant la lumière blanche provenant du dispositif de conversion de longueur d'onde, et projetant cette lumière en avant du véhicule pour former un faisceau lumineux. Le dispositif de conversion est situé préférentiellement au voisinage du plan focal du système optique d'imagerie.

On observe toutefois que la lumière blanche perçue par l'oeil humain en sortie du dispositif de conversion est en fait la somme d'une partie de la lumière primaire, d'une couleur donnée, qui n'a pas été convertie, et de la lumière convertie par le dispositif de conversion d'une couleur différente. Le mélange des deux couleurs apparait alors sous la forme d'une lumière blanche.

On observe également que la diffusion de la lumière phosphorescence restituée par le dispositif de conversion met en oeuvre des processus lents de passage des molécules du matériau phosphorescent d'un état singulet à un état triplet, suivi d'une désexcitation radiative, alors que la diffusion de la lumière provenant de la source primaire est quasiment instantanée.

L'invention se propose de tirer parti de ces deux observations. La publication DE 10 2006 025020 divulgue un système d'éclairage et de signalisation pour véhicule automobile comprenant une première source de lumière primaire et un premier dispositif de conversion de longueur d'onde recevant le premier faisceau de lumière primaire et renvoyant un rayonnement de lumière secondaire qui traverse le dispositif de conversion.

Le système d'éclairage et/ou de signalisation selon l'invention comprend :

- une première source de lumière primaire produisant un premier faisceau de lumière primaire de longueur d'onde donnée,
- un premier dispositif de conversion de longueur d'onde de type réfléchissant recevant le premier faisceau de lumière primaire et renvoyant un rayonnement de lumière secondaire,
- un système optique d'imagerie recevant le rayonnement de lumière secondaire renvoyé par le dispositif de conversion et formant un faisceau de lumière projetée en direction d'une zone à éclairer,

Ce système d'éclairage se caractérise en ce qu'il comprend :

- un premier capteur de lumière, générant un signal correspondant à la lumière reçue par ce capteur, laquelle comprend une part de lumière non convertie du premier faisceau de lumière primaire qui est renvoyée par le dispositif de conversion dans le faisceau de lumière projetée et qui est réfléchie par un obstacle situé dans la zone éclairée par ledit faisceau de lumière projetée,
- une unité de commande comprenant :

  ◦ des premiers moyens de modulation pour générer un signal de modulation de la première lumière primaire,
  ◦ des premiers moyens de démodulation pour traiter le signal généré par ledit premier capteur de lumière, et déterminer une première distance entre ledit obstacle et le système d'éclairage.

Le système selon l'invention permet donc de manière simple et peu onéreuse d'obtenir une évaluation de la distance d'un obstacle situé dans le faisceau de lumière projetée servant à l'éclairage.

Le système comporte également les caractéristiques additionnelles suivantes :

Un premier filtre, est disposé à une entrée du premier capteur de lumière, pour ne laisser passer que de la lumière de longueur d'onde identique ou proche de la longueur d'onde de la lumière primaire émise par la première source de lumière primaire.

La longueur d'onde de la première lumière primaire émise par la première source de lumière primaire est inférieure à 500nm, et préférentiellement comprise entre 400nm et 470 nm.

Le faisceau de lumière projetée provenant du système optique d'imagerie est de couleur blanche.

Les premiers moyens de modulation de la première lumière primaire sont prévus pour engendrer un signal sinusoïdal modulé à très haute fréquence, et pour superposer ce signal sur un signal porteur, de contenu fréquentiel limité à des fréquences plus basses.

La fréquence du signal sinusoïdal modulé est supérieure à 1GHz.

Le signal sinusoïdal modulé est affecté par une modulation en phase variant sous forme de rampes périodiques, de préférence linéaires, dont la fréquence est comprise entre 10 MHz et 100 MHz.

Les premiers moyens de démodulation comprennent :

- un mélangeur non linéaire pour combiner le signal de modulation de la lumière primaire avec le signal généré par le capteur de lumière,
- un filtre passe-bas pour éliminer les hautes fréquences du signal issu du mélangeur non linéaire, de sorte que le signal sortant du filtre passe-bas a une fréquence proportionnelle à la première distance entre ledit obstacle et le système d'éclairage.

La première source lumière primaire est un laser, et de préférence une diode laser.

Le système d'éclairage comprend en outre :

- des moyens de balayage recevant le premier faisceau de lumière primaire issu de la première source de lumière primaire et répartissant ledit premier faisceau de lumière primaire sur une surface du dispositif de conversion, en contrôlant la position spatiale dudit premier faisceau de lumière primaire,
- des moyens de traitement d'image associés à l'unité de commande, pour créer une image tridimensionnelle du relief éclairé par le faisceau de lumière secondaire, en associant la position spatiale du premier faisceau de lumière primaire à la première distance mesurée pour cette position.

Selon une deuxième forme de réalisation de l'invention, le système comprend :

- une deuxième source de lumière primaire produisant un deuxième faisceau de lumière primaire de longueur d'onde donnée, et dirigé vers le dispositif de conversion de manière à être intégré dans le faisceau lumineux issu du système optique d'imagerie,
- un deuxième capteur de lumière, générant un signal correspondant à la lumière reçue par ce deuxième capteur de lumière, laquelle comprend une part de la lumière provenant du deuxième faisceau de lumière primaire renvoyé par le dispositif de conversion dans le faisceau de lumière projetée et qui est réfléchie par un obstacle situé dans la zone éclairée par ledit faisceau de lumière projetée,
- un deuxième moyen de modulation intégré dans l'unité de commande pour générer un signal de modulation de la deuxième lumière primaire,
- un deuxième moyen de démodulation, intégré dans l'unité de commande, pour traiter le signal généré par le deuxième capteur de lumière, et pour déterminer une deuxième distance entre ledit obstacle et le système d'éclairage.

Le deuxième faisceau de lumière primaire a une longueur d'onde qui est située dans un spectre non visible par l'oeil humain, et qui est adaptée pour ne pas être transformée par le dispositif de conversion, de sorte que le faisceau de lumière provenant de la seconde source de lumière primaire est entièrement réfléchi par le dispositif de conversion en direction du système optique d'imagerie.

La longueur d'onde du deuxième faisceau lumineux issu de la deuxième source de lumière primaire est supérieure à 800nm.

Le deuxième moyen de modulation de la deuxième lumière primaire est prévu pour engendrer un signal sinusoïdal modulé à très haute fréquence, et pour superposer ce signal sur un signal porteur de contenu fréquentiel limité à des fréquences plus basses.

Le système d'éclairage comprend en outre un miroir réfléchissant la lumière d'une longueur d'onde égale à la longueur d'onde du deuxième faisceau de lumière issu de la deuxième source de lumière primaire et transparent aux lumières de longueur d'onde différentes, vers lequel sont dirigés les faisceaux de lumière issus respectivement de la première et de la deuxième source de lumière primaire pour être renvoyés vers le dispositif de conversion par l'intermédiaire des moyens de balayage.

Les moyens de balayage, la première et la deuxième source de lumière primaire sont pilotés pour qu'une image formée sur le dispositif de conversion par le faisceau provenant de la première source de lumière primaire soit strictement incluse dans une image formée sur ce dispositif par le faisceau issu de la seconde source de lumière primaire.

L'invention concerne enfin un Véhicule automobile comprenant au moins un système d'éclairage et/ou de signalisation selon l'une au moins des revendications précédentes.

L'invention sera mieux comprise à la lecture des figures annexées, qui sont fournies à titre d'exemples et ne présentent aucun caractère limitatif, dans lesquelles :

- la figure 1 représente une vue schématique du système selon une première forme d'exécution de l'invention,
- la figure 2 représente un diagramme de répartition des intensités de la lumière renvoyée par le dispositif de conversion en fonction de la longueur d'onde,
- la figure 3 représente une vue schématique d'un véhicule comprenant un système d'éclairage selon l'invention.
- La figure 4 représente une vue schématique du système selon une deuxième forme d'exécution de l'invention,

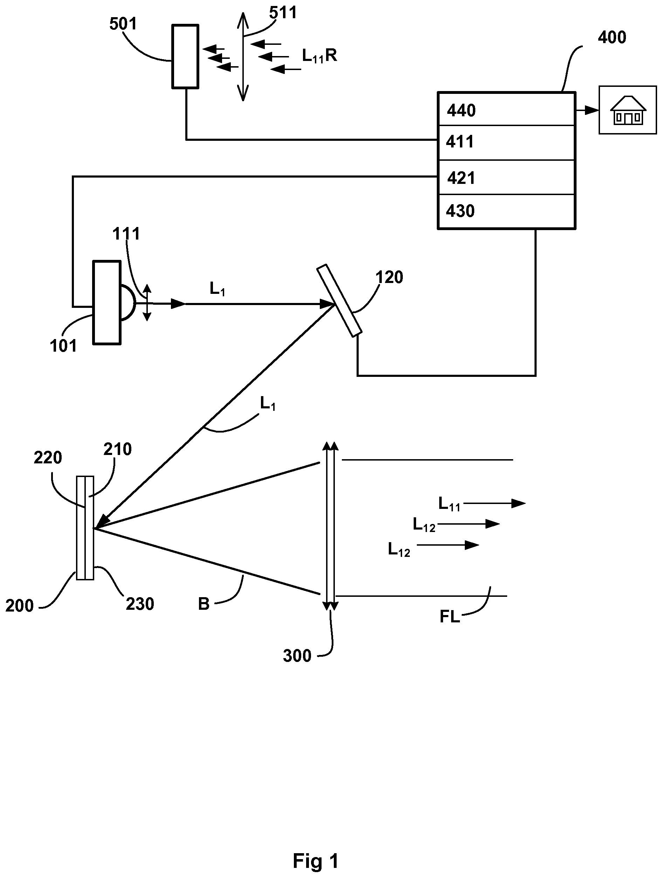

Selon une première forme d'exécution de l'invention, le système d'éclairage décrit à la figure 1 comprend une première source primaire de rayonnement 101 produisant un premier faisceau de lumière primaire $L_1$ dont la longueur d'onde est connue et calibrée. En aval de la première source primaire sont disposés des premiers moyens optiques 111 de focalisation de la lumière de manière à obtenir un faisceau de lumière primaire collimaté apte à être dirigé de manière précise au sein du système d'éclairage.

Aussi, de préférence, la source de lumière primaire 101 est formée par un laser, tel que par exemple une diode laser. La diode laser présente en particulier l'avantage de pouvoir facilement être modulée en intensité en faisant varier le courant continu d'alimentation au-dessus de la valeur de seuil. Et de faire varier l'intensité de la lumière émise à des fréquences très élevées, de l'ordre de plusieurs GHz.

La longueur d'onde du faisceau $L_1$ issu de la première source de lumière primaire 101 est inférieure à 500nm et peut utilement être comprise entre 400nm et 470nm. De bons résultats ont été obtenus pour une longueur d'onde proche de 450nm. Ces longueurs d'ondes correspondent à des couleurs allant du bleu au proche ultraviolet, lesquelles présentent l'avantage d'être peu présentes dans l'environnement naturel.

Le premier faisceau de lumière primaire $L_1$, issu de la première source primaire 101, est dirigé par l'intermédiaire d'un miroir 120 vers un dispositif de conversion de longueur d'onde 200.

Le miroir 120 peut être un miroir fixe ou, de manière préférentielle, un miroir à balayage formé d'un miroir unique, mobile autour de deux axes orthogonaux, et piloté par des moyens de balayage 430 intégrés dans une unité de commande 400.

Le premier faisceau de lumière primaire $L_1$ est dévié selon deux directions par le système de balayage 120, et vient intercepter la surface de balayage 230 située sur le dispositif de conversion 200 sur laquelle il crée une image.

La source de rayonnement laser 101 et les moyens de balayage 120 peuvent utilement être montés dans un système intégré faisant appel à des composants micromécaniques et microélectroniques (MEMS).

Le dispositif de conversion 200 peut être du type traversant comme celui décrit dans la publication EP 2 063 170 déjà citée ou, de manière préférentielle, de type réfléchissant.

On observe en effet que, lorsque le rayonnement provenant de la source primaire traverse le dispositif de conversion, les phénomènes d'absorption par le substrat en matériau transparent et les réflexions parasites du rayonnement traversant les dioptres du dispositif de conversion, limitent la puissance restituée par le dispositif en raison du fait qu'une part importante de la lumière convertie est rayonnée dans des directions non souhaitées. De plus, le substrat en matériau transparent est généralement en polycarbonate ou en verre, qui sont des matériaux connus pour leur mauvaise conductivité thermique.

Aussi, on préférera utiliser un substrat 220 formant miroir, et recouvert d'une couche de matériau phosphorescent 210. Le système de balayage et le système optique d'imagerie 300 sont alors situés du même côté réfléchissant du miroir, de sorte que le rayonnement émis par la source primaire ne traverse plus le substrat transparent, et que la lumière émise est renvoyée directement vers un système optique 300. Les pertes de rayonnement, et donc les échauffements parasites, sont ainsi considérablement diminués.

Chaque point de la surface de balayage 230 du dispositif de conversion 200 impacté par le premier faisceau de lumière primaire $L_1$ réémet une lumière $L_{12}$ de longueur d'onde différente.

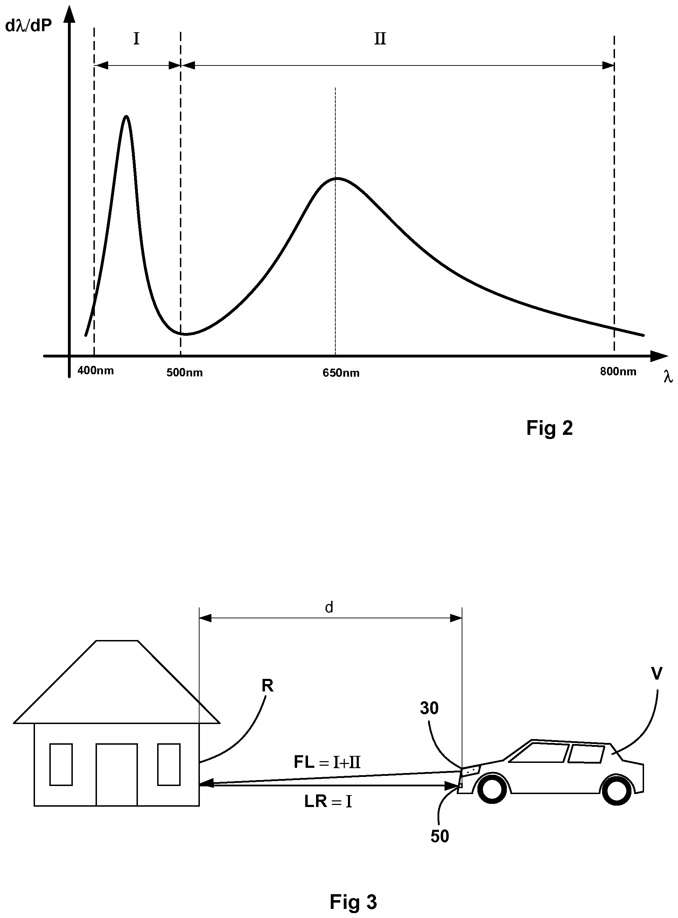

Cette lumière d'émission mélange indistinctement des lumières de longueurs d'ondes différentes, supérieures à la longueur d'onde de la source laser, et réparties dans le spectre de la lumière visible entre 500nm et 800nm, comme cela est illustré à la figure 2, qui représente le diagramme de la puissance lumineuse renvoyée par le dispositif de conversion en fonction de la longueur d'onde. La lumière réémise par le dispositif de conversion de longueur d'onde (lumière d'émission) est représentée dans la zone II.

Les molécules phosphorescentes possèdent la propriété d'absorber de l'énergie lumineuse (lumière d'excitation) et de la restituer lentement sous forme de lumière phosphorescente (lumière d'émission). Une fois l'énergie d'excitation absorbée, les molécules se trouvent alors dans un état électroniquement excité. Le retour à l'état fondamental suivi par l'émission de photons se fait par une étape de transition qui n'est pas permise par le modèle quantique, mais qui est rendue possible par le couplage spin-orbite. Cette étape de transition n'est pas instantanée, ce qui explique que l'émission de photons de lumière phosphorescente est distribuée sur une période de temps postérieure à l'instant d'excitation. Pour un ensemble de molécules ces transitions sont donc réparties dans le temps.

Il en résulte que les modulations de la source primaire au-delà d'une certaine fréquence, de l'ordre de quelques milliers de Hz, seront absorbées par le dispositif de conversion.

Toutefois, comme cela a été évoqué ci-dessus, une partie de la lumière provenant du premier faisceau de lumière primaire $L_1$ n'est pas convertie. Cette lumière $L_{11}$, de même longueur d'onde que la première lumière primaire, représentée dans la zone I de la figure 2, est réfléchie directement par le dispositif de conversion en direction du système d'imagerie optique 300.

Ainsi, la lumière secondaire B renvoyée par le dispositif de conversion est composée de la somme de la part de lumière du premier faisceau primaire convertie $L_{12}$ (lumière d'émission) et de la part de lumière du premier faisceau primaire réfléchie $L_{11}$ directement par le dispositif de conversion 200. Elle peut apparaître comme une lumière de couleur blanche lorsque les matériaux formant la couche phosphorescente 210 du dispositif de conversion 200 sont choisis en conséquence, de manière à accorder le spectre de la lumière d'émission avec la longueur d'onde de la lumière primaire émise par la source de lumière primaire 101. Cette couleur peut être modifiée en sélectionnant de manière appropriée les matériaux phosphorescents ou la longueur d'onde de la lumière primaire.

L'invention repose sur la possibilité, à l'aide de premiers moyens de modulation 421, intégrés dans l'unité de commande 400, de moduler en phase l'amplitude du champ électrique alimentant la première source primaire générant le premier faisceau de lumière primaire $L_1$. La lumière secondaire B renvoyée par le dispositif de conversion et qui est dirigée vers le système d'imagerie optique 300, reproduit cette modulation, en ce qu'elle est composée en partie par de la lumière primaire non convertie $L_{11}$. Cette part de lumière non convertie peut alors être utilisée pour obtenir une information relative à l'environnement.

Cette modulation reste imperceptible par l'oeil humain lorsque sa fréquence est élevée.

Le dispositif de conversion est placé préférentiellement au voisinage immédiat du plan focal du système optique 300, de sorte que la lumière secondaire totale B renvoyée par le dispositif de conversion 200 forme à l'infini une image de la surface 230 du dispositif de conversion excitée par le premier faisceau de lumière primaire $L_1$. Le système optique d'imagerie 300 forme un faisceau de lumière projetée FL composé de la lumière $L_{12}$ réémise par les différents points de la couche de matériau phosphorescent en réponse à l'excitation laser (lumière d'émission), et de la lumière du faisceau primaire non convertie $L_{11}$.

Les phénomènes décrits ci-dessus sont similaires lorsque le dispositif de conversion ne comporte pas de substrat formant miroir, et que le premier faisceau de lumière primaire $L_1$ provenant de la première source primaire 101 traverse le dispositif de conversion.

Le faisceau de lumière projetée FL émis par le système d'imagerie, formant à titre d'exemple le système d'éclairage d'un véhicule V tel qu'illustré à la figure 3, peut rencontrer un obstacle R sur son parcours. Cet obstacle R renvoie en direction du véhicule, une partie de la lumière projetée FL qu'il reçoit.

Un premier capteur de lumière 501, disposé à l'avant du véhicule recueille la lumière provenant de l'environnement. Et une partie de cette lumière reçue $L_{11}R$ est constituée par la lumière renvoyée par ledit obstacle et provenant du faisceau de lumière projetée FL, laquelle contient une partie de lumière modulée provenant du faisceau de lumière primaire $L_{11}$ non convertie.

Pour éviter les lumières parasites, Il s'avère utile de placer en entrée du premier capteur de lumière 501 un premier filtre 511 adapté pour ne laisser passer que la seule lumière de longueur d'onde identique ou proche de la longueur d'onde de la première lumière primaire $L_{11}$ émise par la première source primaire 101. On entend ici par proche, une bande passante d'une largeur comprise entre +/- 10nm par rapport à la longueur d'onde de la première source primaire. Le filtre peut être formé d'un verre coloré ou encore, pour plus de précision, être de type interférentiel.

La seule lumière restante $L_{11}R$ vue par le premier capteur 501, est alors composée en grande partie de la lumière issue du premier faisceau modulé de lumière primaire $L_{11}$ réfléchi directement par le dispositif de conversion 200 et contenue dans le faisceau de lumière projetée FL provenant du système optique d'imagerie. Lorsque la longueur d'onde de la première source primaire est éloignée des sources de lumières ambiantes, comme c'est le cas de la lumière bleue produite par la diode laser, on observe que pratiquement toute la lumière reçue par le capteur de lumière 501 provient du faisceau de lumière projetée FL.

Avantageusement, on s'arrange pour que la dimension du premier capteur de lumière 501 soit suffisamment grande, de manière à absorber les écarts angulaires liés à la position des différents obstacles. On peut également ajouter une optique adaptée 511 devant le premier capteur de lumière 501 pour limiter le champ étudié et capter plus de lumière tout en s'affranchissant de la direction dans laquelle se situe l'obstacle.

Il est alors possible, au niveau d'un premier démodulateur 411 compris dans l'unité de commande 400, d'analyser cette lumière qui porte cette modulation pour en tirer une information sur la distance à laquelle se trouve l'obstacle R sur lequel a été réfléchi le faisceau de lumière projetée FL, en mettant en évidence le décalage entre le signal émis et le signal reçu. Ce décalage est lié au temps de déplacement de la lumière sur la distance d séparant l'obstacle R du véhicule V, comme cela est illustré à la figure 3.

L'unité de commande 400 comprend un premier modulateur 421 apte à moduler l'amplitude du champ électrique alimentant la source de lumière 101. La détermination de la forme de la modulation est guidée par le choix de l'information que l'on désire obtenir.

Une première forme de modulation consiste à envoyer une impulsion ou un train d'impulsion comme cela est pratiqué couramment en télémétrie. Ce procédé peut convenir pour évaluer une simple distance, comme cela pourrait être le cas lorsque le miroir 120 est fixe et que l'on utilise une source de lumière primaire autre qu'un laser.

Toutefois, cette technologie s'avère limitée lorsque l'on désire reconstituer une image tridimensionnelle complète des obstacles éclairés par le faisceau de lumière projetée FL, comme cela va être exposé dans ce qui suit.

Il est proposé, selon l'invention, de moduler en amplitude le champ électrique alimentant la première source de lumière primaire de manière à obtenir un signal lumineux qui soit modulé en phase sous forme de rampes, et préférentiellement de rampes linéaires. La lumière primaire combine alors un premier signal sinusoïdal porteur, de contenu fréquentiel peu élevé, avec un second signal sinusoïdal modulé à haute fréquence. Ce que l'on réalise facilement avec une diode laser en ajoutant une composante alternative au courant continu d'alimentation.

Cette modulation sera du type :

$$A * \cos(2\pi(f + \frac{\Delta f}{\Delta T}\ t)t).$$

où $A$ représente l'amplitude moyenne du signal, f la fréquence d'un second signal sinusoïdal modulé en phase suivant une rampe linéaire, $\left(\frac{\Delta f(t)}{\Delta T}\right)$ de période $\Delta T$.

Le signal reçu au niveau du capteur de lumière 501 après filtrage sera alors du type :

$$A' * \cos\ (2\pi(f + \frac{\Delta f}{\Delta T}(t - \frac{2d}{c}))t).$$

où $d$ représente la distance entre l'obstacle R et le système d'imagerie 300, et $c$ la vitesse de la lumière.

Après les corrections et les calibrages appropriés, il est possible au niveau du premier démodulateur 411, de procéder à la multiplication de ces deux signaux l'un par l'autre.

En appliquant les règles de la trigonométrie, on obtient un produit de la forme :

$$\frac{A * A'}{2}\left[\cos\left(2\pi \frac{\Delta f}{\Delta T}\frac{2d}{c}\ t\right) + \cos\left(2\pi\left(2f + \frac{\Delta f}{\Delta T}\left(2t - \frac{2d}{c}\right)\right)t\right)\right]$$

Ce produit est la somme d'une composante sinusoïdale à basse fréquence, $\cos\left(2\pi \frac{\Delta f}{\Delta T}\frac{2d}{c}\ t\right)$, dont la fréquence est proportionnelle à la distance d, et d'une composante à très haute fréquence, $\cos\left(2\pi\left(2f + \frac{\Delta f}{\Delta T}\left(2t - \frac{2d}{c}\right)\right)t\right)$.

Il est alors possible, à l'aide d'un filtre passe-bas, d'éliminer la composante haute fréquence de ce produit, et de mesurer la fréquence du signal restant, laquelle est proportionnelle à la distance d à laquelle se trouve l'obstacle R, pour avoir une évaluation de cette distance d.

Le premier démodulateur 411, qui reçoit le signal provenant du premier capteur de lumière 501 comprend alors un multiplicateur analogique, ou plus précisément, compte tenu des très hautes fréquences en jeu, un mélangeur non linéaire, ainsi qu'un filtre passe-bas, fonctionnant sur les principes exposés ci-dessus ainsi qu'un analyseur de fréquence permettant de déterminer une première distance $d_1$.

Le premier modulateur 421 et le premier démodulateur 411 fonctionnent bien évidemment de manière synchrone.

Cette méthode de traitement du signal s'avère particulièrement intéressante lorsque l'on cherche à reconstituer une image tridimensionnelle des obstacles éclairés par le faisceau de lumière projetée FL.

Aussi il peut s'avérer intéressant de tirer avantage d'un dispositif d'éclairage dans lequel le miroir 120 est piloté en balayage, et dans lequel la source de rayonnement primaire 101 est un laser de type diode laser.

Les moyens de balayage, comprennent le miroir 120 associé à des moyens de commande 430 installés dans l'unité de commande 400. Le mouvement du miroir 120, permet de diriger le faisceau de lumière primaire $L_1$, et d'impacter chacun des points de la surface de balayage 230 du dispositif de conversion 200, à une fréquence de balayage donnée, qui est de l'ordre de quelques dizaines de Hz. En pilotant de manière appropriée des coupures de la source laser on peut constituer une image adaptable à volonté de la source de lumière primaire sur la surface de balayage et obtenir la forme souhaitée du faisceau FL projetée à travers le système optique 300.

Il est alors possible, connaissant la position du miroir 120, d'en déduire à chaque instant le point de la surface de balayage 230 éclairé par le premier faisceau de lumière primaire $L_1$. On peut connaitre alors de façon précise le trajet optique, et donc la direction dans l'espace, du rayon lumineux $L_{11}$ formant une composante du faisceau de la lumière secondaire B et de la lumière projetée FL, qui est de même longueur d'onde que le premier faisceau de lumière primaire $L_1$, et qui est réfléchi directement en ce point de la surface de balayage 230 par le dispositif de conversion 200 sans avoir fait l'objet d'une transformation de longueur d'onde.

Ce rayon lumineux $L_{11}$ est faiblement dispersé et va impacter un obstacle de façon ponctuelle. La lumière $L_{11}R$ réfléchie par l'obstacle R et reçue par le premier capteur de lumière 501, sera alors représentative d'une première distance $d_1$ entre ce point de l'obstacle R et le système d'éclairage.

On peut alors associer cette première distance $d_1$ mesurée, à un trajet optique donné et à un point précis de la surface de balayage 230.

Dans le but d'augmenter la précision du dispositif, on s'arrange pour régler les fréquences de balayage, et les fréquences de modulation du faisceau primaire, de manière à ce qu'il soit possible de considérer que chaque point de la surface de balayage, associé alors à un pixel, réfléchisse un rayon lumineux comportant un grand nombre de périodes du signal modulé en forme de rampe.

La fréquence du signal modulé généré par le premier modulateur 421 formant partie de l'unité de commande 400, peut utilement avoir une valeur supérieure ou égale à 1 GHz. Et la fréquence de reproduction des rampes peut être comprise entre 10MHz et 100MHz.

La fréquence du signal porteur qui est complexe et correspond à l'image que constitue le faisceau projeté par le système, peut être beaucoup plus basse, et inférieure à 1kHz, et peut utilement être comprise entre 100Hz et 500Hz.

A chaque point, ou pixel de la surface de balayage est donc associée une première distance $d_1$, ce qui permet à un module de traitement d'image 440 formant partie de l'unité de commande 400, de reconstituer l'image en relief éclairée par le faisceau de lumière projetée FL.

Le dispositif selon l'invention permet donc de cumuler au sein d'un même ensemble un moyen d'éclairage ou de signalisation et un moyen de formation d'une carte tridimensionnelle des obstacles situés dans le faisceau de lumière projetée, généré par le système d'éclairage.

Cette image en relief peut alors être utilisée à des fins de sécurité, pour détecter la présence d'un obstacle imprévu, ou pour réguler les distances entre véhicules, ou pour tout autre usage intéressant l'aide à la conduite d'un véhicule.

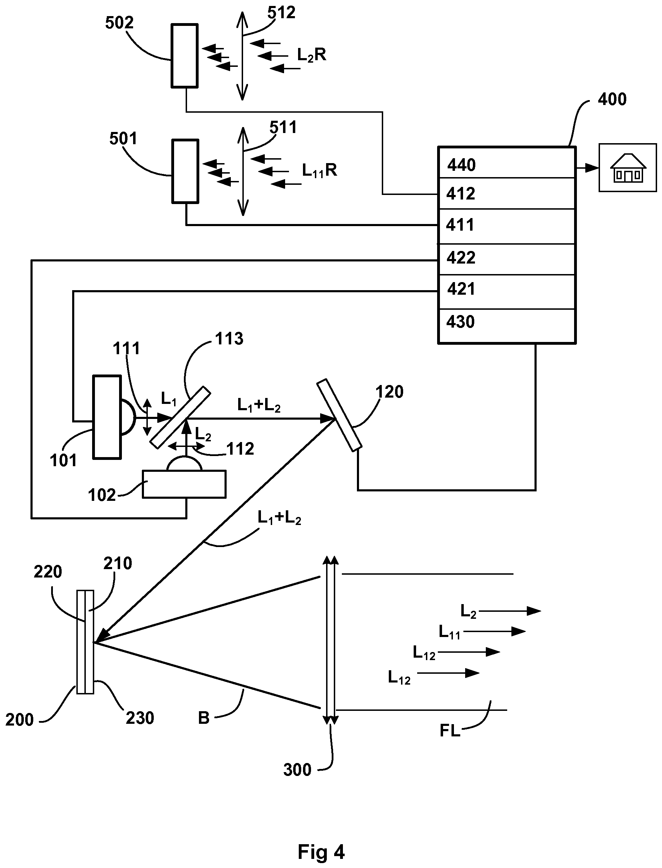

L'invention prévoit également une deuxième forme d'exécution illustrée à la figure 4, dans laquelle le système d'éclairage comprend une deuxième source de lumière primaire 102, dont la longueur d'onde est différente de celle de la première source de lumière primaire et se situe préférentiellement dans les longueurs d'onde situées en dehors du spectre visible par l'oeil humain.

Le faisceau $L_2$ émis par la deuxième source 102 est dirigé à travers une optique 112 sur un miroir 113, réfléchissant pour la lumière ayant la même longueur d'onde que la lumière émise par la seconde source de lumière primaire 102, mais qui est transparent pour les lumières ayant d'autres longueurs d'onde et en particulier celle de à la lumière émise par la première source de lumière primaire 101. De sorte que le faisceau de lumière issu du miroir 113 est formé par le faisceau $L_1$ traversant le miroir 113 et issu de la première source 101 de lumière primaire, et du faisceau $L_2$ réfléchi par le miroir 113 et issu de la seconde source 102 de lumière primaire.

Ce faisceau composé est alors dirigé vers le dispositif de conversion 120 par l'intermédiaire du miroir à balayage 120.

On s'arrange également pour que la longueur d'onde de la lumière émise par la deuxième source de lumière primaire n'excite pas le phosphore du dispositif de conversion, et soit en dehors de la plage de longueur d'onde pour laquelle le dispositif de conversion est opérant. En d'autres termes, on s'arrange pour que le faisceau $L_2$ soit entièrement réfléchi par le substrat 220 du système de conversion 200.

Préférentiellement, on choisira une diode laser émettant dans les infra-rouges de longueur d'onde supérieure à 800nm comme deuxième source de lumière primaire 102.

La lumière secondaire B renvoyée par le dispositif de conversion est alors composée de la somme de la part de lumière du faisceau primaire convertie $L_{12}$ (lumière d'émission) et de la part de lumière du faisceau primaire réfléchie directement par le dispositif de conversion $L_{11}$, mais également de la lumière provenant de la seconde source primaire $L_2$.

Cette lumière apparait de couleur blanche pour les mêmes raisons que celles exposées ci-dessus, et n'est pas modifiée par la lumière de longueur d'onde $L_2$ qui n'est pas dans le spectre de la lumière visible.

Selon les mêmes principes que ceux décrits dans les paragraphes précédents, la lumière issue de la deuxième source primaire 102 est modulée par un deuxième modulateur 422 apte à moduler l'amplitude du champ électrique alimentant la deuxième source de lumière primaire 102 de manière à obtenir un signal lumineux superposé à un signal porteur qui soit modulé en phase sous forme de rampes préférentiellement linéaires.

La fréquence de modulation peut être de même ordre que celle utilisée pour la source primaire.

La lumière $L_2R$ réfléchie par l'obstacle R est détectée par le deuxième capteur de lumière 502 équipé d'un filtre 512 ne laissant passer que la seule lumière de longueur d'onde identique ou proche de la longueur d'onde provenant de la deuxième source de lumière primaire $L_2$,, et qui est placé à l'avant du véhicule.

Le signal provenant du deuxième capteur 502 est alors traité par le deuxième démodulateur 412 placé dans l'unité de commande 400 selon les mêmes principes que ceux exposés pour le fonctionnement du premier démodulateur 411.

IL est alors possible, comme cela a déjà été exposé d'associer une deuxième distance mesurée $d_2$, à un trajet optique donné et à un point précis de la surface de balayage 230 dans le but de reconstituer une image 3D de l'environnement éclairé par le véhicule.

Lorsque les faisceaux de lumière $L_{11}$ et $L_2$ sont dirigés sur un même point de l'espace, les distances $d_1$ et $d_2$ sont identiques.

Le module de traitement d'image reçoit alors deux informations de distance et peut reconstituer le paysage avec une meilleure précision.

Toutefois, l'intérêt de cette variante de réalisation de l'invention réside dans le fait qu'il est possible d'utiliser la deuxième source de lumière primaire en complément de la première source de lumière primaire, lorsque cette première source n'est pas activée ou n'éclaire pas des zones de l'espace dont on cherche à déterminer le profil.

Cette situation se présente lorsque le véhicule circule dans des conditions d'éclairage naturel suffisantes. La première source de lumière primaire101 est coupée. Il est alors possible d'activer la deuxième source de lumière primaire 102 et de projeter par le système d'éclairage du véhicule la seule lumière modulée $L_2$ issue de la seconde source de lumière primaire. On obtient alors une image du relief permettant de conserver actives les fonctions de veille et de sécurité. Cette source de lumière reste invisible à l'oeil humain.

La deuxième situation dans laquelle ce dispositif comportant les deux sources de lumière primaire se révèle être particulièrement avantageux est celle qui se produit lorsque l'image projetée par le système d'éclairage et issue de la première source de lumière primaire doit être partiellement modifiée pour ne pas éblouir les véhicules provenant en sens inverse. On procède alors à des coupures de la première source de lumière primaire lorsque le faisceau issu du miroir 120 est destiné à être dirigé vers les zones que l'on désire ne pas éclairer, comme la portion du cadran supérieur gauche lorsque le véhicule a son poste de conduite à droite. L'information relative au relief présent dans cette zone provient alors uniquement de l'image formée à partir de la seconde source de lumière primaire $L_2$. Cette disposition permet, entre autre, d'augmenter la taille de l'image 3D dans la direction verticale.

Un troisième avantage réside enfin dans le fait qu'il est possible d'élargir l'image formée par le faisceau de lumière secondaire B en augmentant la taille de l'image formée sur le miroir 220 du dispositif de conversion. La source de lumière primaire n'est alors activée que pour former l'image du faisceau lumineux servant à l'éclairage proprement dit, et dont la taille est réduite par rapport à l'image globale émise par le miroir 220. On obtient une image 3D élargie composée à partir de la lumière émise par la première source de lumière primaire 101 et correspondant au paysage éclairé par le faisceau de lumière blanche complétée par l'image 3D composée à partir de la lumière émise par la deuxième source de lumière primaire 102 et correspondant au paysage se situant à l'extérieur de la zone éclairée par le faisceau de lumière blanche.

Dans ces trois configurations, l'image formée par le premier faisceau de lumière primaire $L_1$ sur le dispositif de conversion 200 est strictement incluse dans l'image formée sur ce dispositif par le deuxième faisceau de lumière primaire $L_2$.

On comprend bien que le système d'éclairage sera utilisé en conditions nocturnes ou dans un environnement sombre (intempéries ou tunnel par exemple) en générant des faisceaux d'éclairage usuels dans ces conditions de conduite, de type feu de croisement ou feu de route notamment, et qu'il pourra également être utilisé en condition diurne en générant une partie au moins d'un faisceau de signalisation du type feu de position ou de feu de position diurne (DRL), obtenu par modulation de largeur d'impulsion du balayage. Ainsi, le système selon l'invention peut être fonctionnel en toutes situations et conditions de conduite du véhicule équipé de ce système.

Les modes de réalisation préférentiels de l'invention servant de base à la présente description, ne sont pas limitatifs, et peuvent faire l'objet de variantes permettant d'obtenir les effets techniques tels que décrits et revendiqués, ou des effets équivalents.

**Revendications**

1. Système d'éclairage et/ou de signalisation, notamment pour véhicule automobile, comprenant :

   - une première source de lumière primaire (101) produisant un premier faisceau de lumière primaire ($L_1$) de longueur d'onde donnée,
   - un premier dispositif de conversion de longueur d'onde (200) de type réfléchissant recevant le premier faisceau de lumière primaire ($L_1$) et renvoyant un rayonnement de lumière secondaire (B),
   - un système optique d'imagerie (300) recevant le rayonnement de lumière secondaire (B) renvoyé par le dispositif de conversion (200) et formant un faisceau de lumière projetée (FL) en direction d'une zone à éclairer,

   **caractérisé en ce qu'**il comprend :

   - un premier capteur de lumière (501), générant un signal correspondant à la lumière ($L_{11}R$) reçue par ce capteur, laquelle comprend une part de lumière non convertie ($L_{11}$) du premier faisceau de lumière primaire ($L_1$) qui est renvoyée par le dispositif de conversion dans le faisceau de lumière projetée (FL) et qui est réfléchie par un obstacle (R) situé dans la zone éclairée par ledit faisceau de lumière projetée (FL),
   - une unité de commande (400) comprenant :

     ◦ des premiers moyens de modulation (421) pour générer un signal de modulation de la première lumière primaire ($L_1$),
     ◦ des premiers moyens de démodulation (411) pour traiter le signal généré par ledit premier capteur de lumière (501), et déterminer une première distance ($d_1$) entre ledit obstacle (R) et le système d'éclairage.

2. Système d'éclairage selon la revendication 1, comprenant en outre un premier filtre (511), disposé à une entrée du premier capteur de lumière (501), apte à ne laisser passer que de la lumière de longueur d'onde identique ou proche de la longueur d'onde de la lumière primaire ($L_1$) émise par la première source de lumière primaire (101).

3. Système d'éclairage selon la revendication 1 ou la revendication 2, dans lequel la longueur d'onde de la première lumière primaire ($L_1$) émise par la première source de lumière primaire (101) est inférieure à 500nm.

4. Système d'éclairage selon l'une des revendications 1 à 3, dans lequel le faisceau de lumière projetée (FL) provenant du système optique d'imagerie (300) est de couleur blanche.

5. Système d'éclairage selon l'une des revendications 1 à 4, dans lequel les premiers moyens de modulation (421) de la première lumière primaire ($L_1$) sont prévus pour engendrer un signal sinusoïdal modulé à très haute fréquence, et pour superposer ce signal sur un signal porteur, de contenu fréquentiel limité à des fréquences plus basses.

6. Système d'éclairage selon la revendication 5, dans lequel la fréquence du signal sinusoïdal modulé est supérieure à 1GHz.

7. Système d'éclairage selon la revendication 5 ou la revendication 6, dans lequel le signal sinusoïdal modulé est affecté par une modulation en phase variant sous forme de rampes périodiques, dont la fréquence est comprise entre 10 MHz et 100 MHz.

8. Système d'éclairage selon l'une des revendications 5 à 7, dans lequel les premiers moyens de démodulation (411) comprennent :

   - un mélangeur non linéaire pour combiner le signal de modulation de la lumière primaire ($L_1$) avec le signal généré par le capteur de lumière (501),
   - un filtre passe-bas pour éliminer les hautes fréquences du signal issu du mélangeur non linéaire, de sorte que le signal sortant du filtre passe-bas a une fréquence proportionnelle à la première distance ($d_1$) entre ledit obstacle (R) et le système d'éclairage.

9. Système d'éclairage selon l'une des revendications 1 à 8, dans lequel la première source lumière primaire (10) est une diode laser.

10. Système d'éclairage selon la revendication 9, comprenant en outre :

- des moyens de balayage (120, 430) recevant le premier faisceau de lumière primaire (L$_1$) issu de la première source de lumière primaire (101) et répartissant ledit premier faisceau de lumière primaire (L$_1$) sur une surface (230) du dispositif de conversion (200), en contrôlant la position spatiale dudit premier faisceau de lumière primaire (L$_1$),

- des moyens de traitement d'image (440) associés à l'unité de commande (400),pour créer une image tridimensionnelle du relief éclairé par le faisceau de lumière secondaire (FL), en associant la position spatiale du premier faisceau de lumière primaire (L$_1$) à la première distance (d$_1$) mesurée pour cette position.

11. Système d'éclairage selon l'une des revendications 1 à 10 comprenant :

- une deuxième source de lumière primaire (102) produisant un deuxième faisceau de lumière primaire (L$_2$) de longueur d'onde donnée, et dirigé vers le dispositif de conversion (200) de manière à être intégré dans le faisceau lumineux (FL) issu du système optique d'imagerie (300),

- un deuxième capteur de lumière (502), générant un signal correspondant à la lumière reçue (L$_2$R) par ce deuxième capteur de lumière (502), laquelle comprend une part de la lumière provenant du deuxième faisceau de lumière primaire (L$_2$) renvoyé par le dispositif de conversion dans le faisceau de lumière projetée (FL) et qui est réfléchie par un obstacle (R) situé dans la zone éclairée par ledit faisceau de lumière projetée (FL),

- un deuxième moyen de modulation (422) intégré dans l'unité de commande (400) pour générer un signal de modulation de la deuxième lumière primaire (L$_2$),

- un deuxième moyen de démodulation (412), intégré dans l'unité de commande (400), pour traiter le signal généré par le deuxième capteur de lumière (502), et pour déterminer une deuxième distance (d$_2$) entre ledit obstacle (R) et le système d'éclairage.

12. Système d'éclairage selon la revendication 11, dans lequel le deuxième faisceau de lumière primaire (L$_2$) a une longueur d'onde qui est située dans un spectre non visible par l'oeil humain, et qui est adaptée pour ne pas être transformée par le dispositif de conversion (200), de sorte que le faisceau de lumière (L$_2$) provenant de la seconde source de lumière primaire est entièrement réfléchi par le dispositif de conversion (200) en direction du système optique d'imagerie (300).

13. Système d'éclairage selon la revendication 12, dans lequel la longueur d'onde du deuxième faisceau lumineux (L$_2$) issu de la deuxième source de lumière primaire (502) est supérieure à 800nm.

14. Système d'éclairage selon l'une des revendications 11 à 13, dans lequel le deuxième moyen de modulation (422) de la deuxième lumière primaire (L$_2$) est prévu pour engendrer un signal sinusoïdal modulé à très haute fréquence, et pour superposer ce signal sur un signal porteur de contenu fréquentiel limité à des fréquences plus basses.

15. Système d'éclairage selon l'une des revendications 11 à 14, prises en combinaison avec la revendication 10, comprenant un miroir (113) réfléchissant la lumière d'une longueur d'onde égale à la longueur d'onde du deuxième faisceau de lumière (L$_2$) issu de la deuxième source de lumière primaire (102 et transparent aux lumières de longueurs d'onde différentes, vers lequel sont dirigés les faisceaux de lumière (L$_1$, L$_2$) issus respectivement de la première (101) et de la deuxième (102) source de lumière primaire pour être renvoyés vers le dispositif de conversion (200) par l'intermédiaire des moyens de balayage (120, 430).

16. Système d'éclairage selon la revendication 15, dans lequel les moyens de balayage (120, 430), la première (101) et la deuxième (102) source de lumière primaire sont pilotés pour qu'une image formée sur le dispositif de conversion (200) par le faisceau (L$_1$) provenant de la première source de lumière primaire (101) soit strictement incluse dans une image formée sur ce dispositif (200) par le faisceau (L$_2$) issu de la seconde source de lumière primaire (102).

17. Véhicule automobile **caractérisé en ce qu'**il comprend au moins un système d'éclairage et/ou de signalisation selon l'une au moins des revendications précédentes.


**Patentansprüche**

1. Beleuchtungs- und/oder Signalisierungssystem, insbesondere für ein Kraftfahrzeug, umfassend:

- eine erste Primärlichtquelle (101), die ein erstes Bündel aus Primärlicht (L$_1$) einer bestimmten Wellenlänge erzeugt,

- eine erste reflektierende Wellenlängenumwandlungsvorrichtung (200), die das erste Bündel aus Primärlicht ($L_1$) empfängt und eine Sekundärlichtstrahlung (B) zurücksendet,
- ein optisches Abbildungssystem (300), das die Sekundärlichtstrahlung (B) empfängt, die von der Umwandlungsvorrichtung (200) zurückgesandt wird und ein Bündel aus Licht (FL) bildet, das in Richtung eines zu beleuchtenden Bereichs projiziert wird,

**dadurch gekennzeichnet, dass** es Folgendes umfasst:

- einen ersten Lichtsensor (501), der ein Signal erzeugt, das dem Licht ($L_{11}R$) entspricht, das von diesem Sensor empfangen wird, das einen Teil nicht umgewandelten Lichts ($L_{11}$) des ersten Bündels aus Primärlicht ($L_1$) umfasst, das von der Umwandlungsvorrichtung in dem Bündel aus projiziertem Licht (FL) zurückgesandt wird, und das von einem Hindernis (R) reflektiert wird, das in dem Bereich liegt, der von dem Bündel aus projiziertem Licht (FL) beleuchtet wird,
- eine Steuerungseinheit (400), umfassend:

  o erste Modulationsmittel (421), um ein Modulationssignal des ersten Primärlichts ($L_1$) zu erzeugen,
  o erste Demodulationsmittel (411) um das Signal zu verarbeiten, das von dem ersten Lichtsensor (501) erzeugt wird, und einen ersten Abstand ($d_1$) zwischen dem Hindernis (R) und dem Beleuchtungssystem zu bestimmen.

2. Beleuchtungssystem nach Anspruch 1, ferner umfassend einen ersten Filter (511), der an einem Eingang des ersten Lichtsensors (501) angeordnet ist, der geeignet ist, nur Licht mit einer Wellenlänge durchzulassen, die mit der Wellenlänge des Primärlichts ($L_1$), das von der ersten Primärlichtquelle (101) abgegeben wird, identisch ist oder nahe an dieser liegt.

3. Beleuchtungssystem nach Anspruch 1 oder 2, wobei die Wellenlänge des ersten Primärlichts ($L_1$), das von der ersten Primärlichtquelle (101) abgegeben wird, weniger als 500 nm beträgt.

4. Beleuchtungssystem nach einem der Ansprüche 1 bis 3, wobei das Bündel aus projiziertem Licht (FL), das von dem optischen Abbildungssystem (300) kommt, von weißer Farbe ist.

5. Beleuchtungssystem nach einem der Ansprüche 1 bis 4, wobei die ersten Modulationsmittel (421) des ersten Primärlichts ($L_1$) dafür vorgesehen sind, ein Sinussignal hervorzurufen, das mit sehr hoher Frequenz moduliert wird, und dieses Signal einem Trägersignal mit einem Frequenzinhalt, der auf niedrigere Frequenzen beschränkt ist, zu überlagern.

6. Beleuchtungssystem nach Anspruch 5, wobei die Frequenz des modulierten Sinussignals höher als 1 GHz ist.

7. Beleuchtungssystem nach Anspruch 5 oder 6, wobei das modulierte Sinussignal von einer Phasenmodulation beeinflusst wird, die in Form von periodischen Rampen variiert, deren Frequenz zwischen 10 MHz und 100 MHz liegt.

8. Beleuchtungssystem nach einem der Ansprüche 5 bis 7, wobei die ersten Demodulationsmittel (411) Folgendes umfassen:

   - einen nichtlinearen Mischer, um das Modulationssignal des Primärlichts ($L_1$) mit dem Signal zu kombinieren, das von dem Lichtsensor (501) erzeugt wird,
   - einen Tiefpassfilter, um die hohen Frequenzen des Signals aus dem nichtlinearen Mischer zu eliminieren, damit das Signal, das aus dem Tiefpassfilter austritt, eine Frequenz aufweist, die zum ersten Abstand ($d_1$) zwischen dem Hindernis (R) und dem Beleuchtungssystem proportional ist.

9. Beleuchtungssystem nach einem der Ansprüche 1 bis 8, wobei die erste Primärlichtquelle (10) eine Laserdiode ist.

10. Beleuchtungssystem nach Anspruch 9, ferner umfassend:

    - Abtastmittel (120, 430), die das erste Bündel aus Primärlicht ($L_1$) aus der ersten Primärlichtquelle (101) empfangen und das erste Bündel aus Primärlicht ($L_1$) auf einer Fläche (230) der Umwandlungsvorrichtung (200) verteilen, indem die räumliche Position des ersten Bündels aus Primärlicht ($L_1$) gesteuert wird,
    - Bildverarbeitungsmittel (440), die mit der Steuerungseinheit (400) in Verbindung stehen, um ein dreidimensionales Bild des Reliefs zu erzeugen, das von dem Bündel aus Sekundärlicht (FL) beleuchtet wird, indem die räumliche Position des ersten Bündels aus Primärlicht (L$_1$) mit dem ersten Abstand (d$_1$) in Verbindung gebracht wird, der für diese Position gemessen wird.

**11.** Beleuchtungssystem nach einem der Ansprüche 1 bis 10, umfassend:

- eine zweite Primärlichtquelle (102), die ein zweites Bündel aus Primärlicht (L$_2$) erzeugt, das eine bestimmte Wellenlänge aufweist und das in Richtung der Umwandlungsvorrichtung (200) geleitet wird, so dass es in das Lichtbündel (FL) aus dem optischen Abbildungssystem (300) integriert ist,
- einen zweiten Lichtsensor (502), der ein Signal erzeugt, das dem Licht (L$_2$R) entspricht, das von diesem zweiten Lichtsensor (502) empfangen wird, das einen Teil des Lichts umfasst, das von dem zweiten Bündel aus Primärlicht (L$_2$) kommt, das von der Umwandlungsvorrichtung in dem Bündel aus projiziertem Licht (FL) zurückgesandt wird, und das von einem Hindernis (R) reflektiert wird, das in dem Bereich liegt, der von dem Bündel aus projiziertem Licht (FL) beleuchtet wird,
- ein zweites Modulationsmittel (422), das in die Steuerungseinheit (400) integriert ist, um ein Modulationssignal des zweiten Primärlichts (L$_2$) zu erzeugen,
- ein zweites Demodulationsmittel (412), das in die Steuerungseinheit (400) integriert ist, um das Signal zu verarbeiten, das von dem zweiten Lichtsensor (502) erzeugt wird, und einen zweiten Abstand (d$_2$) zwischen dem Hindernis (R) und dem Beleuchtungssystem zu bestimmen.

**12.** Beleuchtungssystem nach Anspruch 11, wobei das zweite Bündel aus Primärlicht (L$_2$) eine Wellenlänge aufweist, die in einem Spektrum liegt, das für das menschliche Auge nicht sichtbar ist, und die geeignet ist, von der Umwandlungsvorrichtung (200) nicht umgewandelt zu werden, so dass das Bündel aus Licht (L$_2$), das von der zweiten Primärlichtquelle kommt, von der Umwandlungsvorrichtung (200) vollständig in Richtung des optischen Abbildungssystems (300) reflektiert wird.

**13.** Beleuchtungssystem nach Anspruch 12, wobei die Wellenlänge des zweiten Bündels aus Licht (L$_2$), das von der zweiten Primärlichtquelle (502) kommt, größer als 800 nm ist.

**14.** Beleuchtungssystem nach einem der Ansprüche 11 bis 13, wobei das zweite Modulationsmittel (422) des zweiten Primärlichts (L$_2$) dafür vorgesehen sind, ein Sinussignal hervorzurufen, das mit sehr hoher Frequenz moduliert wird, und dieses Signal einem Trägersignal mit einem Frequenzinhalt, der auf niedrigere Frequenzen beschränkt ist, zu überlagern.

**15.** Beleuchtungssystem nach einem der Ansprüche 11 bis 14 in Kombination mit Anspruch 10, umfassend einen Spiegel (113), der das Licht einer Wellenlänge gleich der Wellenlänge des zweiten Bündels aus Licht (L$_2$) aus der zweiten Primärlichtquelle (102) reflektiert und für Lichter anderer Wellenlängen transparent ist, zu welchem die Lichtbündel (L$_1$, L$_2$) aus der ersten (101) bzw. der zweiten (102) Primärlichtquelle geleitet werden, um mittels der Abtastmittel (120, 430) in Richtung der Umwandlungsvorrichtung (200) zurückgesandt zu werden.

**16.** Beleuchtungssystem nach Anspruch 15, wobei die Abtastmittel (120, 430), die erste (101) und die zweite (102) Primärlichtquelle gesteuert werden, damit ein Bild, das von dem Bündel (L$_1$), das von der ersten Primärlichtquelle (101) kommt, auf der Umwandlungsvorrichtung (200) gebildet ist, streng in einem Bild enthalten ist, das von dem Bündel (L$_2$) aus der zweiten Primärlichtquelle (102) auf dieser Vorrichtung (200) gebildet ist.

**17.** Kraftfahrzeug, **dadurch gekennzeichnet, dass** es mindestens ein Beleuchtungs- und/oder Signalisierungssystem nach mindestens einem der vorhergehenden Ansprüche umfasst.

**Claims**

**1.** Lighting and/or signaling system, especially for a motor vehicle, comprising:

- a first primary light source (101) producing a first primary light beam (L$_1$) of given wavelength,
- a first wavelength conversion device (200) of the reflecting type receiving the first primary light beam (L$_1$) and returning a secondary light radiation (B),
- an optical imaging system (300) receiving the secondary light radiation (B) returned by the conversion device (200) of the reflecting type and forming a projected light beam (FL) in the direction of a zone to be lit,

**characterized in that** it comprises:

- a first light sensor (501) generating a signal corresponding to the light ($L_{11}R$) received by this sensor, which light comprises a non-converted light part ($L_{11}$) of the first primary light beam ($L_1$) which is returned by the conversion device in the projected light beam (FL) and which is reflected by an obstacle (R) situated in the zone lit by said projected light beam (FL),
- a control unit (400) comprising

- first modulation means (421) for generating a modulation signal for the first primary light ($L_1$),
- first demodulation means (411) for processing the signal formed by said first light sensor (501), and determining a first distance ($d_1$) between said obstacle (R) and the lighting system.

2. Lighting system according to Claim 1, further comprising a first filter (511) placed at an entrance of the first light sensor (501), capable of letting through only light of wavelength identical or close to the wavelength of the primary light ($L_1$) emitted by the first primary light source (101).

3. Lighting system according to Claim 1 or Claim 2, wherein the wavelength of the first primary light ($L_1$) emitted by the first primary light source (101) is less than 500 nm.

4. Lighting system according to one of Claims 1 to 3, wherein the projected light beam (FL) coming from the optical imaging system (300) is white in color.

5. Lighting system according to one of Claims 1 to 4, wherein the first modulation means (421) of the first primary light ($L_1$) are provided to generate a sinusoidal signal modulated at very high frequency, and to superimpose this signal on a carrier signal, with frequency content limited to lower frequencies.

6. Lighting system according to Claim 5, wherein the frequency of the modulated sinusoidal signal is higher than 1 GHz.

7. Lighting system according to Claim 5 or Claim 6, wherein the modulated sinusoidal signal is affected by a phase modulation varying in the form of periodic ramps, whose frequency lies between 10 MHz and 100 MHz.

8. Lighting system according to one of Claims 5 to 7, wherein the first demodulation means (411) comprise:

- a nonlinear mixer to combine the modulation signal of the primary light ($L_1$) with the signal generated by the light sensor (501),
- a low pass filter to eliminate the high frequencies of the signal coming from the nonlinear mixer so that the output signal of the low pass filter has a frequency proportional to the first distance ($d_1$) between said obstacle (R) and the lighting system.

9. Lighting system according to one of Claims 1 to 8, wherein the first primary light source (10) is a diode laser.

10. Lighting system according to Claim 9, further comprising:

- scanning means (120, 430) receiving the first primary light beam ($L_1$) coming from the first primary light source (101) and distributing said first primary light beam ($L_1$) over a surface (230) of the conversion device (200) by controlling the spatial position of said first primary light beam ($L_1$),
- image processing means (440) associated with the control unit (400), to create a three-dimensional image of the relief illuminated by the secondary light beam (FL) by associating the spatial position of the first primary light beam ($L_1$) with the first distance ($d_1$) measured for this position.

11. Lighting system according to one of Claims 1 to 10, comprising:

- a second primary light source (102) producing a second primary light beam ($L_2$) of given wavelength, and directed toward the conversion device (200), so as to be integrated in the light beam (FL) coming from the optical imaging system (300),
- a second light sensor (502), generating a signal corresponding to the light ($L_2R$) received by this second light sensor (502), comprising a part of the light coming from the second primary light beam ($L_2$) returned by the conversion device in the projected light beam (FL) and which is reflected by an obstacle (R) situated in the zone illuminated by said projected light beam (FL),
- a second modulation means (422) integrated in the control unit (400) to generate a modulation signal of the second primary light (L$_2$),
- a second demodulation means (412), integrated in the control unit (400), to process the signal generated by the second light sensor (502), and to determine a second distance (d$_2$) between said obstacle (R) and the lighting system.

12. Lighting system according to Claim 11, wherein the second primary light beam (L$_2$) has a wavelength which is located in a spectrum not visible to the human eye, and which is adapted so as not to be transformed by the conversion device (200), so that the light beam (L$_2$) coming from the second primary light source is entirely reflected by the conversion device (200) in the direction of the optical imaging system (300).

13. Lighting system according to Claim 12, wherein the wavelength of the second light beam (L$_2$) coming from the second primary light source (502) is greater than 800 nm.

14. Lighting system according to one of Claims 11 to 13, wherein the second modulation means (422) of the second primary light (L$_2$) is provided to generate a sinusoidal signal modulated at very high frequency, and to superimpose this signal on a carrier signal with frequency content limited to lower frequencies.

15. Lighting system according to one of Claims 11 to 14, taken in combination with Claim 10, comprising a mirror (113) reflecting the light of a wavelength equal to the wavelength of the second light beam (L$_2$) coming from the second primary light source (102) and transparent to light of different wavelengths, onto which are directed the light beams (L$_1$, L$_2$) coming respectively from the first (101) and the second (102) primary light source in order to be returned to the conversion device (200) via the scanning means (120, 430).

16. Lighting system according to Claim 15, wherein the scanning means (120, 430), the first (101) and the second (102) primary light source are controlled so that an image formed on the conversion device (200) by the beam (L$_1$) coming from the first primary light source (101) is strictly included in an image formed on this device (200) by the beam (L$_2$) coming from the second primary light source (102).

17. Motor vehicle **characterized in that** it comprises at least one lighting and/or signaling system according to at least one of the preceding claims.

**Fig 1**

dλ/dP

I  II

400nm  500nm  650nm  800nm  λ

**Fig 2**

d

R

V

30

FL = I+II

LR = I

50

**Fig 3**

**Fig 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2063170 A

- DE 102006025020